# EUROPEAN PATENT SPECIFICATION

(11) **EP 2 710 900 B1**
(45) Date of publication and mention of the grant of the patent: **31.01.2018**
(21) Application number: 12785412.3
(22) Date of filing: 03.05.2012
(51) Int. Cl.: A23L 27/30, A23L 33/21, A23L 5/00, A23L 29/30, A23L 27/00, A23P 10/43, A23P 20/10

(54) **AGGLOMERATION-PREVENTABLE SWEETENER, SWEETENER COMPOSITION IN WHICH AGGLOMERATION IS PREVENTED, AND METHOD FOR PREPARING SAME**
SÜSSSTOFF MIT AGGLOMERATIONSVERHINDERUNG, SÜSSSTOFFZUSAMMENSETZUNG MIT AGGLOMERATIONSVERHINDERUNG UND HERSTELLUNGSVERFAHREN DAFÜR
EDULCORANT À AGGLOMÉRATION ÉVITABLE, COMPOSITION D'ÉDULCORANT DANS LAQUELLE L'AGGLOMÉRATION EST ÉVITÉE ET SON PROCÉDÉ DE PRÉPARATION

(30) Priority: 19.05.2011 KR 20110047178
(43) Date of publication of application: 26.03.2014
(73) Proprietor: CJ CheilJedang Corporation, Seoul 100-749 (KR)
(72) Inventor: KIM, Young Jae, Seoul 150-909 (KR); PARK, Jung Gyu, Incheon 402-791 (KR); PARK, Ginny, Goyang-si Gyeonggi-do 411-410 (KR); LIM, Chun Son, Seoul 120-795 (KR)
(74) Representative: Bosch, Matthias
(86) International application number: PCT/KR2012/003477
(87) International publication number: WO 2012/157872

(56) References cited:
- WO-A2-95/17104
- JP-A- 11 075 762
- JP-A- 2000 037 169
- KR-A- 960 028 832
- KR-A- 20080 110 344
- KR-A- 20080 110 344
- US-A- 3 642 535
- US-A- 4 059 706
- DATABASE WPI Week 201114 Thomson Scientific, London, GB; AN 2010-P96137 XP002730257, "Compound low-sugar low-calorie table sweetener comprises dextrose monohydrate, xylitol, maltodextrin and trichlorosucrose", & CN 101 874 599 A (SHANGRONG TECHNOLOGY CO LTD SUZHOU IND P) 3 November 2010 (2010-11-03)

## Description

### [Technical Field]

The present invention relates to a solidification-prevented sweetener material composition in which agglomeration is prevented, and a method for preparing the same.

### [Background Art]

Sugar contains sucrose as a main component, and is one of the representative sweeteners that are added to foods and taste sweet. Depending on its raw materials, examples of sugar can include cane sugar obtained from sugar cane, and beet sugar obtained from sugar beet. In addition, sugar can include maple sugar obtained from sap extracted from sugar maple, and the like.

Sugar products are generally produced in powdery form similar to other sweeteners and flavor enhancers. Thus, sugar also suffers from a solidification phenomenon, which generally occurs during distribution of powdery products.

The solidification phenomenon refers to agglomeration of particles of powdery products by absorbing atmospheric moisture during distribution of the powdery products. As the size of particles is smaller, the area of absorbing moisture becomes wide, thereby intensifying the solidification phenomenon. Such a solidification phenomenon can deteriorate quality of products, causing inconvenience to consumers. In order to prevent such a solidification phenomenon, a method of adding and mixing silicon dioxide, pectin, starch, and the like (as a solidification preventing agent) with a sweetener material has been suggested. However, such a solidification preventing agent is only added in a small amount when the sweetener material composition is prepared, which makes it difficult for the solidification preventing agent to be uniformly distributed throughout the sweetener material composition by a simple mixing method known in the art. For this reason, there is a problem in that the solidification phenomenon of powder is not effectively inhibited.

Dietary fiber refers to high molecular carbohydrates which are known as fibroid materials or cellulose mostly contained in vegetables, fruits, seaweeds, and the like among the foods and which is not digested by human digestive enzymes and excreted from the body.

Fibroid materials are mostly contained in tough parts (cellulose) of vegetables, pectin in fruits, sticky ingredients (alginic acid) of sea mustard or kelp, and the like. Among various dietary fibers, indigestible maltodextrin (resistant maltodextrin) is difficult for persons to digest, and has a high molecular carbohydrate structure having a high degree of polymerization of carbohydrate as compared to general maltodextrin.

On the other hand, sugar is the best sweetener material for sweetness, and can be used in various foods, processed foods, and the like for improving the taste of foods and stimulating appetite. However, researches has frequently reported the harmfulness of sugar that excessive consumption of sugar can cause adult diseases such as obesity, diabetes and the like, which become a serious problem. In order to overcome this problem, various sweetener materials replacing sugar are being studied, and further studies capable of inhibiting the absorption into the body even when sugar is taken have been actively performed.

Xylose is a natural sweetener found in birch, corn and the like, and has about 40% the sweetness of sugar. Xylose is known as one of diverse sweetener materials that can supplement the harmfulness of sugar by replacing sugar.

When xylose is taken together with sugar, xylose can inhibit the activity of sucrase which is a sugar digestion enzyme, thereby inhibiting digestion of sugar. As a result, sugar's absorption into the body is inhibited and sugar is discharged from the body. It is also recognized that xylose has effects of inhibiting rapid increase of blood glucose level and preventing adult diseases, such as diabetes, obesity, and the like.

Further, arabinoxylan, which is a complex polysaccharide consisting of arabinose and xylose, is a physiological active substance related to antiallergic, immune activity and anticancer action, and various study results concerning arabinoxylan have been released in recent years.

US 3 642 535 A describes a tabletting sugar made up of agglomerates of fondant-size sucrose crystals having a crystal size in the range 3-50 microns and containing sucrose and from about 0.5 to about 7.5 percent by weight malto-dextrin based on the sucrose content which is prepared by concentrating a sugar syrup containing sucrose and malto-dextrin, the sucrose and malto-dextrin being present in the above-indicated proportions.

US 4 059 706 A is directed at a slurry-forming substantial level of discretely-sized undissolved L-aspartic acid sweetening compound which is encapsulated in a water soluble encapsulating agent by drying a uniform dispersion as by spray drying to yield a high density readily soluble powderous sweetening composition which is readily blendable and uniform in sweetening power and resists caking and clumping.

WO 95/17104 A2 describes a stabilized dipeptide sweetener that is prepared as an aqueous suspension and then mixed with a minor amount of a water soluble flow agent comprising food grade polymers, hydrocolloids and gums to form a suspension. The suspension is then blended with a solubilized encapsulation agent comprising maltodextrin, gum arabic, starches and mixtures thereof. This blend is then dried so that the maltodextrin or gum coats and encapsulates the aspartame/flow agent composition as a dry particulate powder.

CN 101 874 599 A relates to a composite low-sugar low-calorie dining-table sweetener and a preparation method thereof. The composite low-sugar low-calorie dining-table sweetener comprises the following components of 65 to 89 percent of dextrose monohydrate, 5 to 20 percent of xylitol, 5 to 12 percent of maltodextrin and 0.84 to 1.90 percent of sucralose.

KR 2008 0110344 A is directed at a granular or powdered food composition containing a xylose-coated sugar which is prepared by coating a sugar crystal with an xylose solution, and drying the coated one.

### [Disclosure]

### [Technical Problem]

The present invention is aimed at providing a solidification-prevented sweetener material composition and a method of preparing the same.

In addition, the present invention is aimed at providing a solidification-prevented sweetener material composition including sugar and xylose as constitutional components to inhibit excessive sugar absorption into the human body.

### [Technical Solution]

The invention is as defined by the appended claims. The present invention provides a solidification-prevented sweetener material composition wherein particles of sweetener material powder are coated with dietary fiber, and a method of preparing the same.

The sweetener material includes sugar and xylose in combination.

Sugar is not particularly limited in view of sorts according to raw materials. One or two or more selected from white sugar, brown sugar or black sugar which is in crystalline powder form may be utilized in combination. Sugar has an average particle size from 150 µm to 300 µm. Xylose has an average particle size from 150 µm to 350 µm.

Among various dietary fibers, the indigestible maltodextrin has characteristic properties in that the indigestible maltodextrin is water soluble; the indigestible maltodextrin does not increase viscosity of foods when used in foods; the indigestible maltodextrin has a higher carbohydrate structure with high polymerization degree of carbohydrates as compared to general maltodextrin, thereby having a high quality stability; and the indigestible maltodextrin is a functional material having an effect of inhibiting rapid increase of blood glucose level in the human body. Therefore, the indigestible maltodextrin is appropriate for being used in foods. As the dietary fiber which is a constitutional component of the present invention, the indigestible maltodextrin is used.

The method for coating particles of the sweetener material powders with dietary fiber includes:
1) mixing sweetener material powders in a mixer for food preparation capable of liquid phase spray; 2) coating the mixed powder with a dietary fiber by scattering and mixing the dietary fiber with the mixed powder; and 3) drying the coated sweetener material powder mixture composition in a dryer.

The 3) drying operation is performed such that the water content is about 0.2 wt% or less based on the total weight of the composition.

The solidification-prevented sweetener material composition preferably includes 95 wt% to 99.9 wt% of sweetener material and 0.1 to 5.0 wt% of dietary fiber, based on the total weight of the composition.

As the sweetener material a mixture of sugar and xylose. is used. The formulation ratio of sugar and xylose used as the sweetener material is not particularly limited. However, excessive introduction of xylose can affect the functionality of the sweetener material composition. In order to achieve effective inhibition of sugar absorption into the human body without affecting the functionality, the weight ratio of sugar to xylose is preferably 1: 0.05 to 1: 0.5, more preferably 1: 0.07 to 1: 0.2, still more preferably 1: 0.1.

The solidification-prevented sweetener material composition according to the present invention may be used as a material for sweetener alone or in combination with one or more other food materials.

### [Advantageous Effects]

The solidification-prevented sweetener material composition according to the invention can prevent a solidification phenomenon during distribution and storage thereof.

Further, as that the composition of the present invention includes sugar and xylose, xylose may inhibit sugar's absorption into the human body. As a result, the composition according to the present invention has effects of preventing rapid increase in blood glucose and adult onset diseases such as diabetes and obesity.

### [Mode for Invention]

Terms used herein are defined below.

The term "sweetener" as used herein refers to a generic term for seasonings to add sweetness and food additives.

The term "sweetener material" as used herein refers to a constitutional component constituting the sweetener.

The term "dietary fiber" as used herein is a component known as fibroid materials or cellulose contained mainly in vegetables, fruits, seaweeds and the like among the foods. The dietary fiber is a high molecular carbohydrate which is not digested by human digestive enzymes and discharged from the body.

The term "solidification" as used herein refers to an agglomeration phenomenon generated by moisture absorption by small particles. Such solidification can be frequently noticed in powdered products.

Hereinafter, the present invention will be described in more detail with reference to the following examples, comparative examples and comparative test examples. However, it should be understood that these examples, comparative examples and comparative test examples are provided for illustration only and are not to be in any way construed as limiting the present invention.

### Example 1

### Preparation of solidification-prevented sweetener material composition (includes sugar and xylose)

890 g of fine sugar commercially available from CJ Cheiljedang Co., Ltd. (average particle size: about 220 µm) and 95 g of xylose were added to a mixer, followed by uniformly mixing. Subsequently, 15 g of liquid indigestible maltodextrin (65 brix) was scattered into the mixed powder, thereby uniformly coating the powder. Next, the mixed sweetener material composition was transferred to a dryer. The mixed sweetener material composition was dried through a hot air drying method so that the water content was not more than 0.2 wt% based on the total weight of the mixed sweetener material composition, thereby obtaining 1 kg of the solidification-prevented sweetener material composition containing sugar and xylose.

### Comparative Example 1

### Preparation of sweetener material composition by simply mixing sugar and xylose

900 g of fine sugar commercially available from CJ Cheiljedang Co., Ltd. (average particle size: about 220 µm) and 100 g of xylose (average particle size: about 260 µm) were added to a mixer, followed by uniformly mixing. A sweetener material composition in which sugar and xylose are simply mixed was obtained so that the step of coating powder particles with dietary fiber such as a liquid indigestible maltodextrin as in Example 1 was omitted.

### Comparative Test Example 1

### Comparison analysis for each sweetener material composition using Particle Size Analyzer

The sweetener material compositions prepared in Example 1 and Comparative Example 1, commercially available general sugar (CJ Cheiljedang Co., Ltd., average particle size: about 455 µm) and commercially available fine sugar (CJ Cheiljedang Co., Ltd., average particle size: about 220 µm) were obtained, and compared the particle size of the four sweetener material compositions using a particle size analyzer "Standard Particle Size Analyzer" (Chunggye Corporation).

As the particle size of powders is smaller, the surface area of powders absorbing moisture becomes wider, thereby enhancing powder agglomeration. Accordingly, the solidification phenomenon which is frequently noticed in powder products such as sweeteners becomes severer. In view of this point, measuring the particle size of powders could provide meaningful comparison data. The comparison results for the particle size of each sweetener material composition are shown in Table 1.

**TABLE 1**

| Mesh | Particle size (µm) | General Sugar (%) | Fine Sugar (%) | Xylose (%) | Fine sugar + Xylose (%) | Fine sugar + Xylose + Indigestible maltodextrin coating (%) |
|---|---|---|---|---|---|---|
| 40 | 420 | 56.3 | 0.7 | 12.6 | 1.9 | 13.0 |
| 60 | 250 | 33.5 | 67.9 | 60.0 | 67.1 | 72.0 |
| 80 | 177 | 6.4 | 16.4 | 15.7 | 16.3 | 12.0 |
| 100 | 149 | 2.5 | 7.4 | 6.1 | 7.3 | 2.0 |
| 120 | 125 | 1.1 | 4.5 | 3.1 | 4.4 | 0.5 |
| 140 | 105 | 0.2 | 1.8 | 1.2 | 1.7 | 0.2 |
| Average particle size (µm) | | 455 | 220 | 260 | 224 | 296 |

### Comparative Test Example 2

### Comparison analysis of solidification phenomenon of sweetener material composition depending on particle size

The sweetener material compositions prepared in accordance with Example 1 and Comparative Example 1, a commercially available general sugar (CJ Cheiljedang Co., Ltd., average particle size: about 455 µm) and a commercially available fine sugar (CJ Cheiljedang Co., Ltd., average particle size: about 220 µm) were obtained. A test for comparing the degree of solidification phenomenon generated in the four different sweetener material compositions was performed.

Testing was performed as follows. 1 kg of each of four sweetener material compositions was put into a package bag, followed by providing humidity while the package bag was open at 50°C for 24 hours (0∼24 hours from the start of the test). Subsequently, the compositions were dried 96 hours 24∼120 hours from the start of the test) while the degree of solidification of each sweetener material composition was observed for 24 hours. The comparison results of the degree of solidification are summarized in Table 2.

**TABLE 2**

| | General Sugar | Fine Sugar | Fine sugar + Xylose | Fine sugar + Xylose + Indigestible maltodextrin coating |
|---|---|---|---|---|
| Initiate (Hygroscopic) | Good | Good | Good | Good |
| After 24 hours (dry) | Good | Good | Good | Good |
| After 48 hours (dry) | Solidification initiated at exposed portion | Weak solidification initiated at exposed portion | Weak solidification initiated at exposed portion | Solidification initiated at exposed portion |
| After 72 hours (dry) | Weak solidification initiated at exposed portion | Solidified | Solidification Expansion at exposed portion | Weak solidification initiated at exposed portion |
| After 96 hours (dry) | Solidification Expansion at exposed portion | Solidified | Solidified | Weak solidification initiated at exposed portion |
| After 120 hours (dry) | Solidified | Solidified | Solidified | Solidification Expansion at exposed portion |

In Table 2, the term "good" represents that the powder state directly after opening of the package bag was maintained (the degree of solidification based on the total powder is approximately 0%). The term "solidification initiated" represents the powder state that the surface of powder exposed by opening the package bag started to solidify (within about 10% of degree of solidification). The term "weak solidification" represents the powder state that powder about 2 cm below the exposed surface of powder was solidified (about 20% degree of solidification). The term "solidification expansion" represents the powder state that weak solidification has been conducted throughout the powder (about 40% of degree of solidification). The term "solidified" represents the powder state that strong solidification occurred throughout the powder (about 80% of degree of solidification).

As the result of comparison analysis for degree of solidification, it was found that all the sweetener material compositions initiated solidification 48 hours after start of testing. The solidification phenomenon that could be problematic in powder products was noticed first in the fine sugar having the smallest particle size.

On the basis of particle size, it can be expected that general sugar (average particle size: about 455 µm) having the largest particle size would begin to solidify the latest. However, from results of testing, it was observed that the sweetener material composition (average particle size: about 296 µm) prepared in Example 1 having a particle size smaller than that of the general sugar solidified the latest. It was determined that this was because particles were coated with indigestible maltodextrin, which prevented agglomeration of sweetener material particles due to water absorption and temperature increase.

### Example 2

### Preparation of solidification-prevented sweetener material composition (including sugar and xylose) according to preferable compositional ratio

In mixing sugar with xylose, sugar and xylose were mixed in a weight ratio of about 10:1 as shown in Table 3 as a desirable formulation ratio in order to achieve effective inhibition of sugar's absorption into the human body without affecting the functionality of the sweetener material composition (Fine sugar - CJ Cheiljedang Co., Ltd., average particle size: about 220 µm, Xylose - average particle size: about 260 µm).

Subsequently, in order to determine the content of suitable indigestible maltodextrin such that sugar and xylose in a unit wherein sugar and xylose were uniformly mixed could be coated when coating the sweetener material composition mixed in the aforementioned formulation ratio, five samples in which the content of sugar, xylose and indigestible maltodextrin was adjusted as shown in Table 3 were prepared, followed by testing to measure time required to dry each sample and the content of xylose per 100 g of dried sweetener material composition.

**TABLE 3**

| | Fine sugar (%) | Xylose (%) | Indigestible maltodextrin (%) | Drying Time (min) | Content of xylose per 100 g of composition (g) |
|---|---|---|---|---|---|
| Formulation Ratio (%) | 89.5 | 10.0 | 0.5 | 25 | 8.00 |
| | 89.5 | 9.5 | 1.0 | 35 | 9.20 |
| | 89.0 | 9.5 | 1.5 | 40 | 9.45 |
| | 89.0 | 9.0 | 2.0 | 50 | 8.95 |
| | 86.5 | 8.5 | 5.0 | 120 | 8.40 |

As the results of testing, it was found that the preferred sample in which coating was conducted so that the composition powder had uniform quality and which was excellent in view of process efficiency due to short drying time had the formulation ratio including 89.0 wt% of sugar, 9.5 wt% of xylose and 1.5 wt% of indigestible maltodextrin based on the total weight of the sweetener material composition.

## Claims

1. A method of preparing a solidification-prevented sweetener material composition, comprising:
preparing a sweetener material powder by mixing sugar and xylose in a mixer for food preparation capable of liquid phase spray,
wherein the sugar has an average particle size from 150 µm to 300 µm and the xylose has an average particle size from 150 µm to 350 µm;
scattering indigestible maltodextrin to the sweetener material powder and mixing the sweetener material powder with the indigestible maltodextrin to form a coating layer by coating the sweetener material powder with the indigestible maltodextrin; and
drying the sweetener material powder on which the coating layer is formed such that the water content is 0.2 wt% or less based on the total weight of the sweetener material composition.

2. A solidification-prevented sweetener material composition prepared by the method according to claim 1.

3. The solidification-prevented sweetener material composition according to claim 2, comprising: 95 wt% to 99.9 wt% of the sweetener material powder and 0.1 wt% to 5.0 wt% of the indigestible maltodextrin based on a total weight of the sweetener material composition.

4. The solidification-prevented sweetener material composition according to claim 3, wherein sugar and xylose are mixed in a weight ratio of 1:0.05 to 1: 0.5.

## Patentansprüche

1. Verfahren zum Herstellen einer Süßungsmittelzusammensetzung mit Solidifikationsverhinderung, das umfasst:
Herstellen eines Süßungsmittelpulvers durch Mischen von Zucker und Xylose in einem Mischer für Lebensmittelherstellung, der flüssigphasesprühfähig ist,
wobei der Zucker eine durchschnittliche Partikelgröße von 150 µm bis 300 µm hat und die Xylose eine durchschnittliche Partikelgröße von 150 µm bis 350 µm hat;
Verteilen von unverdaulichem Maltodextrin in dem Süßungsmittelpulver und Mischen des Süßungsmittelpulvers mit dem unverdaulichen Malto-dextrin, um eine Überzugsschicht durch Überziehen des Süßungsmittelpulvers mit dem unverdaulichen Maltodextrin auszubilden; und
Trocknen des Süßungsmittelpulvers, auf dem die Überzugsschicht ausgebildet ist, so dass der Wassergehalt 0,2 Gew.-% oder weniger basierend auf dem Gesamtgewicht der Süßungsmittelzusammensetzung beträgt.

2. Süßungsmittelzusammensetzung mit Solidifikationsverhinderung, das mit dem Verfahren nach Anspruch 1 hergestellt wird.

3. Süßungsmittelzusammensetzung mit Solidifikationsverhinderung nach Anspruch 2, die aufweist: 95 Gew.-% bis 99,9 Gew.-% des Süßungsmittelpulvers und 0,1 Gew.-% bis 5,0 Gew.-% des unverdaulichen Maltodextrins, basierend auf dem Gesamtgewicht der Süßungsmittelzusammensetzung.

4. Süßungsmittelzusammensetzung mit Solidifkationsverhinderung nach Anspruch 3, wobei Zucker und Xylose in einem Gewichtsverhältnis von 1:0,05 bis 1:0,5 gemischt werden.

## Revendications

1. Procédé de préparation d'une composition de matière édulcorante à solidification empêchée, comprenant :
la préparation d'une poudre de matière édulcorante par mélange de sucre et de xylose dans un mélangeur pour préparation alimentaire apte à pulvériser une phase liquide,
dans laquelle le sucre a une taille de particule moyenne de 150 µm à 300 µm et le xylose a une taille de particule moyenne de 150 µm à 350 µm ;
la dispersion de maltodextrine indigeste sur la poudre de matière édulcorante et le mélange de la poudre de matière édulcorante avec la maltodextrine indigeste pour former une couche de revêtement par revêtement de la poudre de matière édulcorante avec la maltodextrine indigeste ; et
le séchage de la poudre de matière édulcorante sur laquelle la couche de revêtement est formée de sorte que la teneur en eau est de 0,2 % en poids ou moins par rapport au poids total de la composition de matière édulcorante.

2. Composition de matière édulcorante à solidification empêchée préparée par le procédé selon la revendication 1.

3. Composition de matière édulcorante à solidification empêchée selon la revendication 2, comprenant : 95 % en poids à 99,9 % en poids de la poudre de matière édulcorante et 0,1 % en poids à 5,0 % en poids de la maltodextrine indigeste par rapport au poids total de la composition de matière édulcorante.

4. Composition de matière édulcorante à solidification empêchée selon la revendication 3, dans laquelle du sucre et du xylose sont mélangés dans un rapport pondéral de 1:0,05 à 1:0,5.
